# EUROPEAN PATENT SPECIFICATION

(11) **EP 1 928 124 B1**
(45) Date of publication and mention of the grant of the patent: **31.05.2017**
(21) Application number: 06291864.4
(22) Date of filing: 30.11.2006
(51) Int. Cl.: H04L 12/26

(54) **Method and apparatus for supporting test of a telecommunication network**
Verfahren und Vorrichtung zur Unterstützung des Tests eines Kommunikationsnetzes
Procede et systeme pour support le Test d'un réseau de télécommunication

(43) Date of publication of application: 04.06.2008
(73) Proprietor: ALCATEL LUCENT, 92100 Boulogne-Billancourt (FR)
(72) Inventor: Pasquale, Donadio, 80129 Napoli (IT); Paparella, Andrea, 21052 Busto Arsizio (Varese) (IT); Riglietti, Roberto, 20059 Vimercate (MI) (Milano) (IT)
(74) Representative: Colombo, Stefano Paolo

(56) References cited:
- US-A- 6 041 042
- US-A1- 2005 195 753
- US-A1- 2006 172 742
- GRAHAM R: "Sniffing (network wiretap, sniffer) FAQ" INTERNET CITATION, [Online] 15 April 2000 (2000-04-15), XP002357967 Retrieved from the Internet: URL:http://www.robertgraham.com/pubs/sniff ing-faq.html> [retrieved on 2006]

## Description

### Field of the invention

The present invention generally relates to the field of telecommunication networks. In particular, the present invention relates to a method and network apparatus for supporting test of a telecommunication network.

### Background of the invention

It is known that a telecommunication network comprises a plurality of network elements for supporting transport of user traffic. When a new telecommunication network is installed, or an already installed telecommunication network is upgraded, it is desirable to test the telecommunication network for checking compliance of network performance to standards upon which the telecommunication network is based.

Typically, for testing a telecommunication network, a separate test is developed for each network element, wherein each test simulates one or more interesting scenarios (for instance, network faults, network different traffic conditions, etc.) and evaluates network element performance in such one or more interesting scenarios.

An operator responsible of testing a telecommunication network typically develops the tests for the various network elements and, upon completion of the tests (e.g. in form of a flow chart) he translates such tests by using either a script programming language such as for instance Perl or Tcl, or a graphic tool such as for instance Win Runner. Then, after translation, the operator adapts the tests to a common test platform.

Successively, the operator launches each test on its respective network element, and then he collects the test results obtained by each network element. Finally, the operator analyzes the collected results and he establishes whether such results are satisfactory or not. In the first case, the network testing is complete. In the second case, the operator has to determine which tests have to be repeated.

It is also known that a telecommunication network may be provided with a network management system (or, briefly, NMS), which is adapted to perform a plurality of management operations on network elements, such as network element configuration management, management of errors occurring at the network element, traffic security management, performance management, and so on.

Each network element is typically provided with an "agent", i.e. with a module adapted to interact with the NMS (in particular, with a module of the NMS which is termed "manager"). Communication between manager and agents is based on the exchange of management messages, which are formatted according to a predetermined management protocol. In circuit-switched networks, an exemplary management protocol may be Q3. In packet-switched networks, an exemplary management protocol may be the Simple Network Management Protocol (or, briefly, SNMP).

Each network element typically comprises a local database storing a list of resources of the network element and, for each resource, one or more attributes. A resource of a network element may be for instance a port, a board or the like. In case the resource is a board, exemplary attributes of the resource may be the alarms the board can generate, the board part-number, etc.

The NMS, for performing the above cited management operations on a given network element, sends to the agent of the given network element a management message comprising a header and a payload. The payload comprises information indicative of the operation to be performed, namely the type of operation and the attribute upon which the operation has to be performed. For instance, the above cited SNMP protocol defines different predefined operations on attributes, such as setting a given attribute to a given value ("set") or reading a value of a given attribute ("get").

US 2005/0195753 discloses a method for detecting wireless access devices coupled to local area network of computer. The method includes coupling a sniffer device to a local area network. The method includes transferring one or more packets to be directed to a selected device over the local area network. The selected device is preferably coupled to the local area network. The method includes intercepting the one or more packets to be directed to the selected device at the sniffer device. Moreover the method includes deriving information from the intercepted one or more packets using the sniffer device. The method can generate one or more marker packets in a selected format using the sniffer device. The marker packets are provided based upon at least a portion of the information derived from the intercepted packets. The method includes transferring the one or more marker packets from the sniffer device over the local area network to the selected device and monitoring an airspace within a vicinity of the selected device using one or more sniffer devices.

US 6,041,042 discloses a method and apparatus for remote monitoring of data on a communications network, wherein data transmitted and received by a port can be examined at a location other than on the device having the examined port. The method includes the steps of selecting a mirror-from-port of a first device from which to mirror packets, selecting an analyzer port of a second device to which to mirror the packets, and mirroring the packets from the mirror-from-port of the first device to the analyzer port of the second device. The mirroring step may include establishing a connection path through the network, encapsulating the packets with a connection path identifier, and sending the encapsulated packets through the network to the second device.

### Summary of the invention

The Applicant has noticed that the above solution for testing a telecommunication network has some drawbacks.

First of all, manually developing a complete test for each network element requires a big effort, since the number of interesting scenarios (with all possible variants) for evaluating a network element performance may be very high. Further, disadvantageously, a test developed for a given network element and translated in a given programming language can be only partially reused for another network element. Therefore, each network element requires developing a test substantially from new, thus implying very long and costly developing operation. Further, an operator responsible of testing a telecommunication network disadvantageously has to know: at least a programming language, a protocol for formatting messages exchanged between network elements and test common platform during test execution, expected results of each test and criteria for establishing whether a test has to be repeated.

Therefore, the Applicant has faced the problem of providing a method for supporting test of a telecommunication network which overcomes the aforesaid drawbacks.

In particular, the Applicant has faced the problem of providing a method for supporting test of a telecommunication network which is simpler and less costly than the known above solution, and which prevents from developing a separated test for each network element.

According to a first aspect, the present invention provides a method for supporting test of a plurality of network elements of a telecommunication network. The method comprises the steps of:
a) detecting a management message transmitted from a network management server to a network element of the plurality of network elements, the management message comprising at least one header and a payload comprising information relative to a management operation to be performed on the network element for testing it;
b) filtering the detected management message for isolating the payload, by removing from the detected management message the at least one header;
c) replicating the payload for obtaining n copies of the payload, n being equal to a number of times for which the management operation has to be performed on the network element or n being equal to a number of network elements of the plurality of network elements upon which the management operation has to be performed;
d) encapsulating the n copies of the payload in n further management messages; and
e) injecting the n further management messages in the telecommunication network for performing the management operation n times on the network element or for performing the management operation on n network elements of the plurality of network elements.

Preferably, the at least an header is one of a transport layer header, a network layer header, a data link layer header and a management header.

Preferably, the step of encapsulating comprises inserting in the n further management messages at least a further header.

Preferably, the at least a further header is one of a transport layer header, a network layer header, a data link layer header and a management header.

Preferably, the method further comprises the steps of collecting from the network element a result of performing the management operation, comparing the result collected from the network element with an expected result and deciding whether to repeat the steps of replicating, encapsulating, injecting according to results of the comparison.

According to a second aspect, the present invention provides a network apparatus to support test of a plurality of network elements of a telecommunication network. The network apparatus comprises:
a) a detecting module for detecting a management message transmitted from a network management server to a network element of the plurality of network elements, the management message comprising at least one header and a payload comprising information relative to a management operation to be performed on the network element for testing it,
b) a filtering and replicating module for:
   - filtering the detected management message for isolating said payload by removing from the detected management message the at least one header and
   - for replicating the payload for obtaining n copies of the payload, n being equal to a number of times for which the management operation has to be performed on the network element or n being equal to a number of network elements of the plurality of network elements upon which the management operation has to be performed;
c) an injecting module for:
   - encapsulating the n copies of the payload in n further management messages and
   - injecting said n further management messages in the telecommunication network for performing the management operation n times on the network element or for performing the management operation on n network elements of the plurality of network elements.

Preferably, the at least an header is one of a transport layer header, a network layer header, a data link layer header and a management header.

Preferably, the injecting module is configured to insert in the n further management messages at least a further header.

Preferably, the at least a further header is one of a transport layer header, a network layer header, a data link layer header and a management header.

Preferably, the network apparatus further comprises a collecting and comparing module for collecting from the network element a result of performing the management operation and for comparing the result collected from the network element with an expected result, and a rescheduler for deciding whether to activate the filtering and replicating module and the injecting module according to results of the comparison.

According to a third aspect, the present invention provides a telecommunication network comprising a plurality of network elements and a network apparatus according to the second aspect of the present invention.

According to a fourth aspect, the present invention provides a computer program for supporting test of a plurality of network elements of a telecommunication network when the program is run on a network apparatus of the telecommunication network, as set forth in claim 16.

According to a fifth aspect, the present invention provides a computer readable medium having a computer program recorded thereon, wherein the computer program is according to the fourth aspect of the present invention.

### Brief description of the drawings

The present invention will become more clear by reading the following detailed description, given by way of example and not of limitation, to be read by referring to the accompanying drawings, wherein:
- Figure 1 schematically shows a telecommunication network connected to an automatic test system according to a first embodiment of the present invention;
- Figure 2 shows a flow chart describing the operation of the automatic test system shown in Figure 1;
- Figure 3 shows structures of management messages processed by the automatic test system of Figure 1;
- Figure 4 schematically shows a telecommunication network connected to an automatic test system according to a second embodiment of the present invention; and
- Figure 5 shows a flow chart describing the operation of the automatic test system shown in Figure 4.

### Best mode for currying out the invention

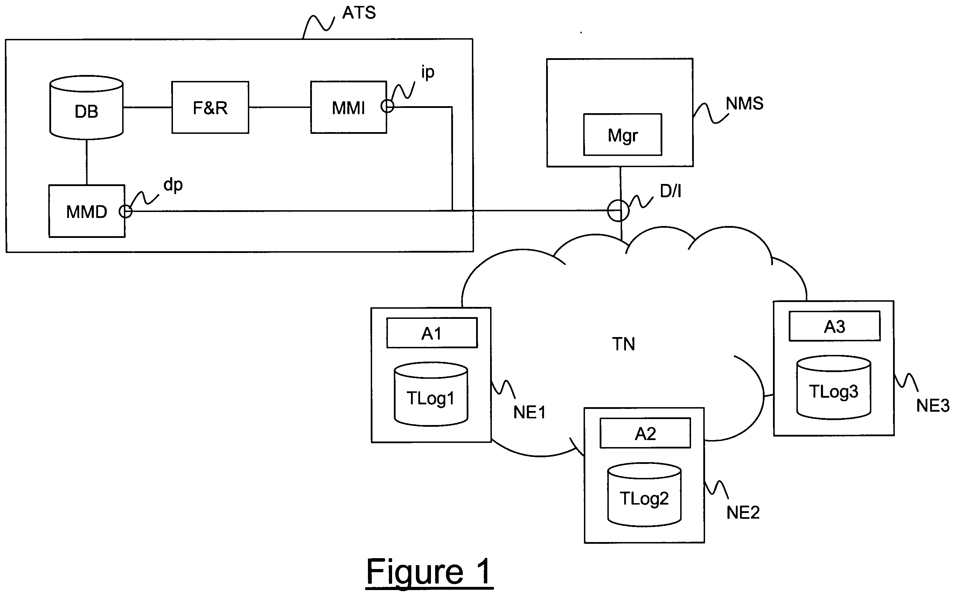

Figure 1 schematically shows a telecommunication network TN connected to an automatic test system ATS according to a first embodiment of the present invention.

The telecommunication network TN comprises a plurality of network elements. In Figure 1, for simplicity, only three network elements NE1, NE2, NE3 are shown. Each network element NE1, NE2, NE3 comprises a respective agent A1, A2, A3 and a respective log database TLog1, TLog2, TLog3, whose function will be described in greater detail herein after. Further, the network TN is provided with a network management system NMS having a manager Mgr. As already mentioned above, the manager Mgr is adapted to communicate with the agents A1, A2, A3 of the network elements NE1, NE2, NE3 through management messages formatted according to a management protocol.

The telecommunication TN is connected to an automatic test system ATS according to a first embodiment of the present invention. In particular, the automatic test system ATS is connected to the network TN in a point such that the automatic test system ATS can detect all management messages exchanged between the manager Mgr and all the agents A1, A2, A3, as shown in Figure 1. In the following description, such a point will be termed detection/injection point D/I.

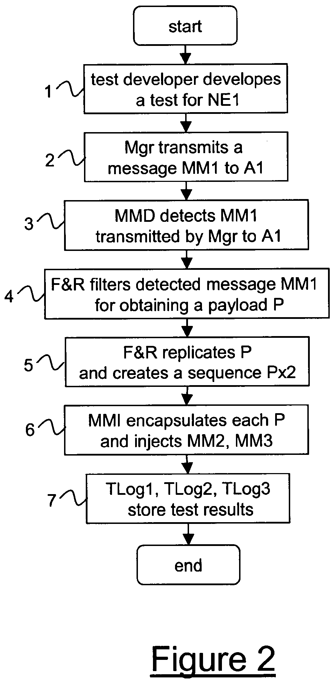

Herein after, by referring to Figure 1, the structure of the automatic test system ATS will be described in detail. Then, by referring to Figure 2, the operation of the automatic test system ATS will be described in detail.

The system ATS preferably comprises a management message detection module MMD, a first database DB, a filtering and replicating module F&R and a management message injection module MMI, connected each other according to a cascaded arrangement. The management message detection module MMD has an input port dp connected to the detection/injection point D/I. Further, the management message injection module MMI has an output ip which is also connected to the detection/injection point D/I. Although Figure 1 shows a single detection/injection point D/I, according to alternative embodiments not shown in the Figures, a detection point separated by an injection point can be provided. According to such alternative embodiments, both the detection point and the injection point should be placed at the output of the manager Mgr, so that all management messages exchanged between the manager Mgr and the agents A1, A2, A3 pass through both the detection point and the injection point. The above modules may be implemented either via hardware, via software or via a combination thereof.

The module MMD is adapted to detect, through the point D/I, possible management messages exchanged between the manager Mgr and the agents A1, A2, A3. Preferably, the module MMD comprises a timer (which is not shown in Figure 1) for counting a detecting period of a predefined duration, during which the module MMD is active. The first database DB is adapted to store possible management messages detected by the module MMD. The filtering and replicating module F&R is adapted to read a management message stored in the first database DB and to remove headers from such a management message for isolating the payload, and to replicate the payload for obtaining n payloads. The module MMI is adapted to receive the n payloads from the module F&R, to encapsulate each payload in a respective management message and to inject the management messages in the telecommunication network TN through the detection/injection point D/I, so that each management message reaches a respective network element.

By referring to Figure 2, the operation of the automatic test system ATS of Figure 1 will be now described in detail.

During a first step 1, the operator responsible of testing the telecommunication network TN develops a test for one of the network elements of the network TN, e.g. for NE1. To this purpose, the operator preferably uses a remote manager application such as for instance the application USM (User Service Manager). By way of example, it is assumed that the test developed for NE1 requires that the network management system NMS configures an attribute (for instance, the attribute sysDescr) of NE1, i.e. it sets the attribute to a given value.

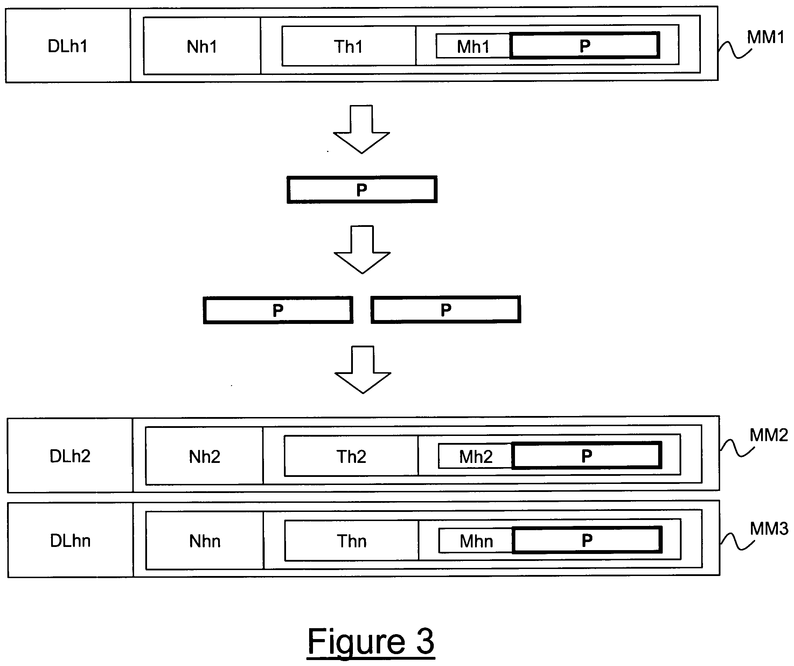

Therefore, when the test is performed, during a successive step 2 the manager Mgr sends to the agent A1 a management message MM1 comprising an operation of configuring the attribute sysDescr. The schematic structure of the management message MM1 is shown in Figure 3. The message MM1 comprises, as already mentioned, a header Mh1 relative to the management protocol (for instance, SNMP) and a payload P comprising information relative to the operation to be performed. In particular, the payload P comprises the operation type (i.e. "set", in case the management protocol is SNMP), an identifier of the attribute upon which the operation has to be performed (i.e. the attribute identifier of sysDescr) and the value to which the attribute has to be set.

Further, as shown in Figure 3, the management message MM1 preferably comprises a transport layer header Th1 (such as, for instance, a Transfer Control Protocol header or a User Datagram Protocol header), a network layer header Nh1 (such as, for instance, an Internet Protocol header) and a data link layer header DLh1 (such as, for instance, an Ethernet header).

By assuming now that the management message detection module MMD is active when the manager Mgr sends the management message MM1 to the agent A1, the module MMD detects the message MM1 through the point D/I (step 3). Detection by the module MMD may be for instance performed according to the known "sniffing" technique at the transport layer. Then, during step 3, the module MMD copies the detected management message MM1 in the first database DB, which stores it. Then, the message MM1 reaches the agent A1 through the network TN. The manager Mgr can send a further management message to the agent A1 (i.e. a "get" message, in case the manager Mgr wishes to check whether configuration of the attribute sysDescr has been correctly performed), and also this further message can be detected and copied by the module MMD in the first database DB.

Then, during a successive step 4, the filtering and replicating module F&R reads the management message MM1 copied in the first database DB and filters it, i.e. it removes the headers DLh1, Nh1, Th1 and Mh1 for isolating the payload P

In other words, the module F&R removes all unnecessary information and isolates only information useful for performing the operation provided by the test and formatted according to the management protocol.

Successively, during a step 5, the module F&R replicates the payload P for obtaining a structure comprising n copies of the payload P. Preferably, the number n is equal to the number of times for which the operation described by P has to be performed. In the above cited example of configuring the attribute sysDescr of NE1, n may be equal to the number of network elements of the same type of NE1, for which the same configuration has to be performed. Alternatively, n may be equal to the number of times for which the configuration described by the payload P have to be repeated on a same network element. Alternatively, n may be equal to NxM, wherein N is the number of network elements of the same type of NE1, for which the same configuration has to be performed, while M is the number of times for which the configuration have to be repeated on a same network element. It has to be noticed that the module F&R has to be able to access network configuration information, such as the number of network elements of each type and their addresses.

In the following, it is assumed that NE1, NE2, NE3 are network elements of a same type, and therefore they require the same configuration of respective sysDescr attributes. Therefore, n is equal to 2. The structure comprising two copies of the payload P is shown in Figure 3. It has to be noticed that in this example the structure comprises only copies of the payload P of the message MM1. If, during step 3, the module MMD detects other management messages (in addition to MM1) sent from the manager Mgr to the agent A1 (e.g. a management message "get"), the module MMD copies also these other management messages in the first database DB. Therefore, the structure formed during step 5 may comprise both copies of the payload P and copies of the payloads of the other management messages.

Then, during a successive step 6, the module F&R forwards the structure comprising the copies of the payload P to the management message injection module MMI, which encapsulates each copy of the payload P in a respective management message MM2, MM3. In particular, the module MMI generates a first management message MM2 having a first management layer header Mh2, a first transport layer header Th2, a first network layer header Nh2 and a first data link layer header DLh2, and it inserts a first copy of the payload P in such a management message MM2. Similarly, the module MMI generates a second management message MM3 having a second management layer header Mh3, a second transport layer header Th3, a second network layer header Nh3 and a second data link layer header DLh3, and it inserts a second copy of the payload P in such a management message MM3.

Then, during a successive step 6, the module MMI injects the management messages MM2, MM3 in the network TN through the point D/I, so that each message MM2, MM3 reaches the agent A2, A3 respectively. In the meanwhile the management message MM1 has reached the agent A1. Then, the operation included in each management message MM1, MM2, MM3 is performed by the network elements NE1, NE2, NE3, respectively. Then, each network element stores test results deriving from the execution of the operation in the respective log database TLog1, TLog2, TLog3. Such test results may be retrieved to be analyzed, as it will be shown herein after.

Therefore, advantageously, the present invention allows to test a telecommunication network without developing a separated test for each network element of the telecommunication network. Indeed, according to the present invention, the operator responsible of testing the network only has to develop a test for a single network element; upon execution of the test, the automatic test system is able to detect and filter management messages exchanged between manager and network elements and to automatically repeat the same test for network elements of the same type of the network element under test. Therefore, advantageously, the effort of the operator in developing the tests is reduced compared to known solution, as well as cost and duration of the testing operation.

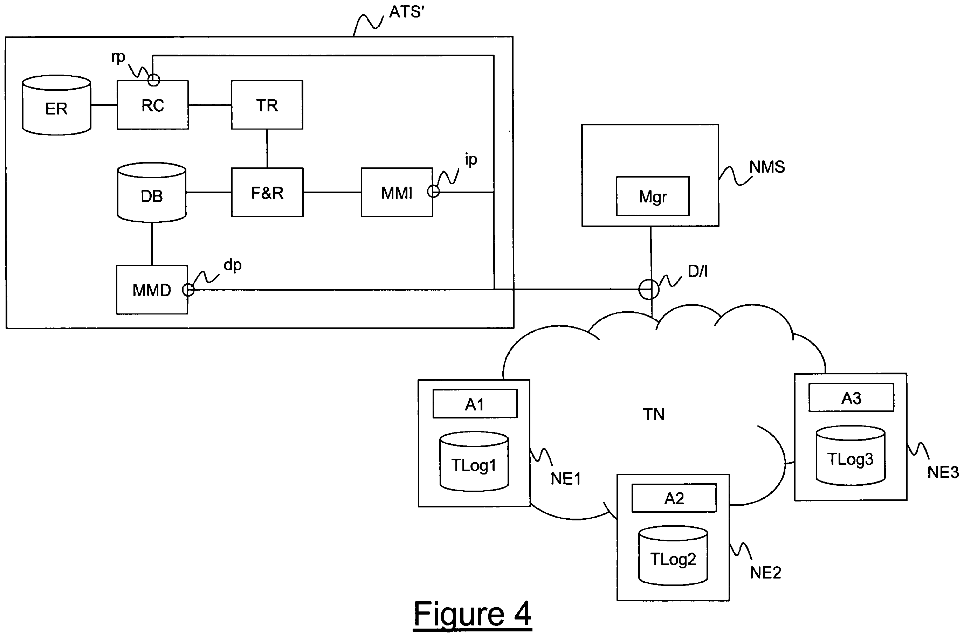

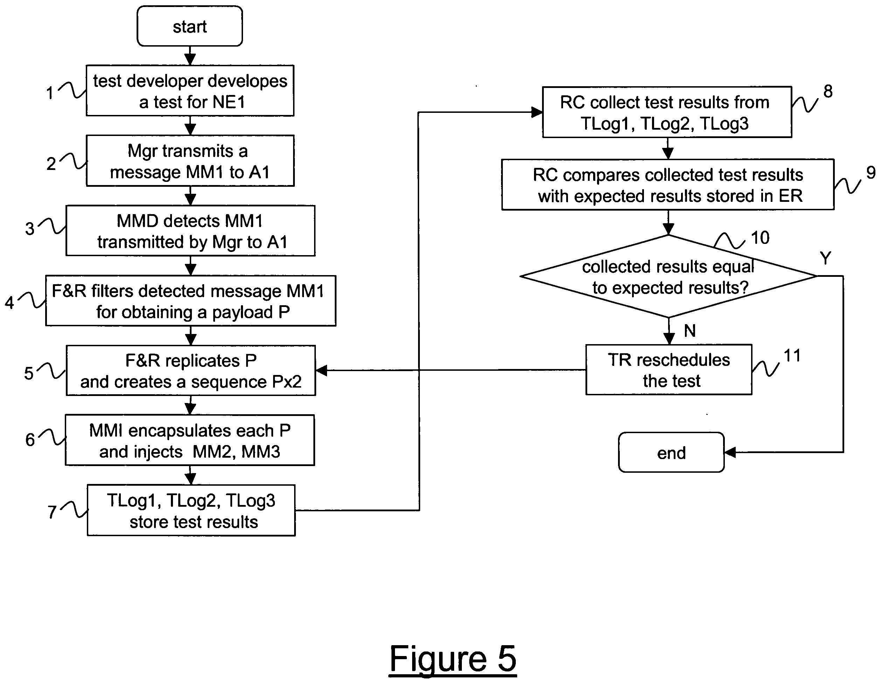

By referring to Figures 4 and 5, the structure and the operation of a automatic test system according to a second embodiment of the present invention will be now described in detail.

The automatic test system ATS' shown in Figure 4 comprises, similarly to the system ATS of Figure 1, a management message detection module MMD, a first database DB, a filtering and replicating module F&R and a management message injection module MMI, connected each other according to a cascaded arrangement. The management message detection module MMD has an input port dp connected to the detection/injection point D/I. Further, the management message injection module MMI has an output ip which is also connected to the detection/injection point D/I. Although Figure 4 shows a single detection/injection point D/I, according to alternative embodiments not shown in the Figures, a detection point separated by an injection point can be provided. According to such alternative embodiments, both the detection point and the injection point should be placed at the output of the manager Mgr, so that all management messages exchanged between the manager Mgr and the agents A1, A2, A3 pass through both the detection point and the injection point.

Since the operation of each module MMD, F&R and MMI has already been described above by referring to Figure 1, a detailed description will not be repeated.

Further, the system ATS' comprises a result compare module RC and a test rescheduling module TR. The module RC is connected to the module TR, which is in turn connected to the filtering and replicating module F&R. The result compare module RC has an input rp which is also connected to the detection/injection point D/I. Further, the result compare module RC is connected to a second database ER.

The module RC is adapted to collect test results from each log database TLog1, TLog2, TLog3 of each network element NE1, NE2, NE3. Besides, the module RC is adapted to compare the collected test results with expected test results stored in the second database ER, and to forward a comparison result to the test rescheduling module TR. The module TR is adapted to determine possible tests to be repeated, according to comparison results received from the module RC. In case a test has to be repeated, the module TR is adapted to send to the module F&R a suitable command, as it will be described herein after.

Herein after, by referring to Figure 5, the operation of the automatic test system ATS' of Figure 4 will be described in detail.

Steps 1 to 7 of Figure 5 are substantially identical to steps 1 to 7 of Figure 2, and therefore a detailed description will not be repeated. At the end of step 7, each network element NE1, NE2, NE3 stores in its log database TLog1, TLog2, TLog3 test results deriving from the execution of its respective test.

During a successive step 8, the result compare module RC collects such test results from each network element NE1, NE2, NE3.

Then, during a successive step 9, the module RC compares the collected test results with the expected test results stored in the second database ER.

If the collected test results correspond to the expected test results (check 10), the test is complete. On the contrary, if during check 10 the module RC determines that the collected test results do not correspond to the expected test results, the module RC forwards the comparison result to the module TR.

During a successive step 11, the module TR, according to the comparison results, determines that the test has to be repeated. Then, the module TR sends to the module F&R a command for repeating the test. The module F&R reads in the first database DB the payload corresponding to the operation to be repeated.

The method then starts again with step 5, wherein the module F&R replicates the read payload P for obtaining n copies of the payload P. Steps 5 to 11 are cyclically repeated, until during check 10 the module RC determines that collected test results are equal to expected test results.

Therefore, according to this second embodiment of the present invention, the automatic test system allows not only to replicate a test developed for a network element thus automatically generating tests for a plurality of network elements, but it is also able to establish automatically whether to repeat a test and to automatically generate repetition of such tests, without requiring human intervention. In other words, the automatic test system according to the present invention is adaptive. This advantageously allows to avoid manual analysis of test results and manual determination of test repetitions, thus further reducing duration and cost of testing a telecommunication network.

## Claims

1. A method for supporting test of a plurality of network elements (NE1, NE2, NE3) of a telecommunication network (TN), wherein said method comprises:
a) detecting a management message (MM1) transmitted from a network management server (NMS) to a network element (NE1) of said plurality of network elements (NE1, NE2, NE3), said management message (MM1) comprising at least one header and a payload (P) comprising information relative to a management operation to be performed on said network element (NE1) for testing it;
b) filtering said detected management message (MM1) for isolating said payload (P), by removing from said detected management message (MM1) said at least one header;
c) replicating said payload (P) for obtaining n copies of said payload (P), n being equal to a number of times for which said management operation has to be performed on said network element (NE1) or n being equal to a number of network elements of said plurality of network elements (NE1, NE2, NE3) upon which said management operation has to be performed;
d) encapsulating said n copies of said payload (P) in n further management messages (MM2); and
e) injecting said n further management messages (MM2) in said telecommunication network (TN) for performing said management operation n times on said network element (NE1) or for performing said management operation on n network elements of said plurality of network elements (NE1, NE2, NE3).

2. The method according to claim 1, wherein said at least an header is one of a transport layer header (Th1), a network layer header (Nh1), a data link layer header (DLh1) and a management header (Mh1).

3. The method according to any of preceding claims, wherein said step d) comprises inserting in said n further management messages (MM2) at least a further header.

4. The method according to claim 3, wherein said at least a further header is one of a transport layer header (Th2), a network layer header (Nh2), a data link layer header (DLh2) and a management header (Mh2).

5. The method according to any of preceding claims, wherein it further comprises:
f) collecting from said network element (NE1) a result of performing said management operation;
g) comparing said result collected from said network element (NE1) with an expected result; and
h) deciding whether to repeat steps c), d) and e) according to results of said comparison.

6. A network apparatus (ATS) to support test of a plurality of network elements (NE1, NE2, NE3) of a telecommunication network (TN), wherein said network apparatus (ATS) comprises:
a) a detecting module (MDD) for detecting a management message (MM1) transmitted from a network management server (NMS) to a network element (NE1) of said plurality of network elements (NE1, NE2, NE3), said management message (MM1) comprising at least one header and a payload (P) comprising information relative to a management operation to be performed on said network element (NE1) for testing it;
b) a filtering and replicating module (F&R) for:
- filtering said detected management message (MM1) for isolating said payload (P) by removing from said detected management message (MM1) said at least one header; and
- replicating said payload (P) for obtaining n copies of said payload (P), n being equal to a number of times for which said management operation has to be performed on said network element (NE1) or n being equal to a number of network elements of said plurality of network elements (NE1, NE2, NE3) upon which said management operation has to be performed; and
c) an injecting module (MMI) for:
- encapsulating said n copies of said payload (P) in n further management messages (MM2); and
- injecting said n further management messages (MM2) in said telecommunication network (TN) for performing said management operation n times on said network element (NE1) or for performing said management operation on n network elements of said plurality of network elements (NE1, NE2, NE3).

7. The network apparatus (ATS) according to claim 6, wherein said at least an header is one of a transport layer header (Th1), a network layer header (Nh1), a data link layer header (DLh1) and a management header (Mh1).

8. The network apparatus (ATS) according to claim 6 or 7, wherein said injecting module (MMI) is configured to insert in said n further management messages (MM2) at least a further header.

9. The network apparatus (ATS) according to claim 8, wherein said at least a further header is one of a transport layer header (Th2), a network layer header (Nh2), a data link layer header (DLh2) and a management header (Mh2).

10. The network apparatus (ATS) according to any of claims 6 to 9, wherein it further comprises:
d) a collecting and comparing module (RC) for:
- collecting from said network element (NE1) a result of performing said management operation; and
- comparing said result collected from said network element (NE1) with an expected result; and
e) a rescheduler (TR) for deciding whether to activate said filtering and replicating module (F&R) and said injecting module (MMI) according to results of said comparison.

11. A telecommunication network (TN) comprising a plurality of network elements (NE1, NE2, NE3) and a network apparatus (ATS) according to any of claims 6 to 10.

12. A computer program for supporting test of a plurality of network elements (NE1, NE2, NE3) of a telecommunication network (TN) when said program is run on a network apparatus (ATS) of said telecommunication network (TN), wherein said computer program comprises:
a) first computer program code means (MMD) for detecting a management message (MM1) transmitted from a network management server (NMS) to a network element (NE1) of said plurality of network elements (NE1, NE2, NE3), said management message (MM1) comprising at least one header and a payload (P) comprising information relative to a management operation to be performed on said network element (NE1) for testing it;
b) second computer program code means (F&R) for:
- filtering said detected management message (MM1) for isolating said payload (P) by removing from said detected management message (MM1) said at least one header; and
- replicating said payload (P) for obtaining n copies of said payload (P), n being equal to a number of times for which said management operation has to be performed on said network element (NE1) or n being equal to a number of network elements of said plurality of network elements (NE1, NE2, NE3) upon which said management operation has to be performed; and
c) third computer program code means (MMI) for:
- encapsulating said n copies of said payload (P) in n further management messages (MM2); and
- injecting said n further management messages (MM2) in said telecommunication network (TN) for performing said management operation n times on said network element (NE1) or for performing said management operation on n network elements of said plurality of network elements (NE1, NE2, NE3).

13. A computer readable medium having a computer program recorded thereon, wherein said computer program is according to claim 12.

## Patentansprüche

1. Verfahren zur Unterstützung des Testens einer Vielzahl von Netzelementen (NE1, NE2, NE3) eines Telekommunikationsnetzes (TN), wobei besagtes Verfahren umfasst:
a) das Feststellen einer Verwaltungsnachricht (Management Message, MM1), die von einem Netzwerkverwaltungsserver (Netzwerk Management Server, NMS) an ein Netzwerkelement (NE1) aus besagter Vielzahl von Netzwerkelementen (NE1, NE2, NE3) übermittelt wird, wobei besagte Verwaltungsnachricht (MM1) mindestens eine Kopfzeile und ein Nutzdatum (Payload, P) umfasst, welches Information bezüglich einer Verwaltungsoperation umfasst, die auf besagtem Netzwerkelement (NE1) auszuführen ist, um dieses zu testen;
b) das Filtern der besagten, festgestellten Verwaltungsnachricht (MM1) zum Isolieren besagten Nutzdatums (P) durch das Auslesen der besagten, mindestens einen Kopfzeile aus der besagten, festgestellten Verwaltungsnachricht (MM1);
c) das Replizieren des besagten Nutzdatums (P) zum Erhalt von n Kopien des besagten Nutzdatums (P), wobei n gleich einer Anzahl von Malen ist, die besagte Verwaltungsoperation auf dem besagten Netzwerkelement (NE1) auszuführen ist, oder wobei n gleich einer Anzahl von Netzwerkelementen aus der besagten Vielzahl von Netzwerkelementen (NE1, NE2, NE3) ist, auf welche besagte Verwaltungsoperation anzuwenden ist;
d) das Einkapseln der besagten n Kopien des besagten Nutzdatums (P) in n weitere Verwaltungsnachrichten (MM2); und
e) das Einspeisen der besagten, n weiteren Verwaltungsnachrichten (MM2) in besagtes Telekommunikationsnetz (TN) zum n-maligen Durchführen der besagten Verwaltungsoperation auf besagtem Netzwerkelement (NE1) oder zum Durchführen der besagten Verwaltungsoperation auf n Netzwerkelementen aus der besagten Vielzahl von Netzwerkelementen (NE1, NE2, NE3).

2. Das Verfahren nach Anspruch 1, wobei die besagte, mindestens eine Kopfzeile entweder eine Transportebenenkopfzeile (Th1), oder eine Netzwerkebenenkopfzeile (Nh1), oder eine Datenlinkebenenkopfzeile (DLh1) oder eine Verwaltungsebenenkopfzeile (Mh1) ist.

3. Das Verfahren nach einem jeglichen der vorgenannten Ansprüche, wobei der besagte Schritt d) umfasst, in n weitere Verwaltungsnachrichten (MM2) mindestens eine weitere Kopfzeile einzufügen.

4. Das Verfahren nach Anspruch 3, wobei die besagte, mindestens eine weitere Kopfzeile entweder eine Transportebenenkopfzeile (Th2), oder eine Netzwerkebenenkopfzeile (Nh2), oder eine Datenlinkebenenkopfzeile (DLh2) oder eine Verwaltungsebenenkopfzeile (Mh2) ist.

5. Das Verfahren nach einem jeglichen der vorgenannten Ansprüche, wobei es weiterhin umfasst;
f) das Einholen eines Ergebnisses des Durchführens der besagten Verwaltungsoperation von dem besagten Netzwerkelement (NE1);
g) das Vergleichen des besagten, von besagtem Netzwerkelement (NE1) eingeholten Ergebnisses mit einem erwarteten Ergebnis; und
h) das gemäß dem Ergebnis des besagten Vergleichs erfolgende Entscheiden, ob die Schritte c), d) und e) zu wiederholen sind.

6. Netzvorrichtung (ATS) zur Unterstützung des Testens einer Vielzahl von Netzelementen (NE1, NE2, NE3) eines Telekommunikationsnetzes (TN), wobei besagte Netzvorrichtung (ATS) umfasst:
a) ein Feststellmodul (MDD) für das Feststellen einer Verwaltungsnachricht (Management Message, MM1), die von einem Netzwerkverwaltungsserver (Netzwerk Management Server, NMS) an ein Netzwerkelement (NE1) aus besagter Vielzahl von Netzwerkelementen (NE1, NE2, NE3) übermittelt wird, wobei besagte Verwaltungsnachricht (MM1) mindestens eine Kopfzeile und ein Nutzdatum (Payload, P) umfasst, welches Information bezüglich einer Verwaltungsoperation umfasst, die auf besagtem Netzwerkelement (NE1) auszuführen ist, um dieses zu testen;
b) ein Filter- und Repliziermodul (F&R) für:
- das Filtern der besagten, festgestellten Verwaltungsnachricht (MM1) zum Isolieren besagten Nutzdatums (P) durch das Auslesen der besagten, mindestens einen Kopfzeile aus der besagten, festgestellten Verwaltungsnachricht (MM1); und
- das Replizieren des besagten Nutzdatums (P) zum Erhalt von n Kopien des besagten Nutzdatums (P), wobei n gleich einer Anzahl von Malen ist, die besagte Verwaltungsoperation auf dem besagten Netzwerkelement (NE1) auszuführen ist, oder wobei n gleich einer Anzahl von Netzwerkelementen aus der besagten Vielzahl von Netzwerkelementen (NE1, NE2, NE3) ist, auf welche besagte Verwaltungsoperation anzuwenden ist; und
c) ein Einspeisemodul (MMI) für:
- das Einkapseln der besagten n Kopien des besagten Nutzdatums (P) in n weitere Verwaltungsnachrichten (MM2); und
- das Einspeisen der besagten, n weiteren Verwaltungsnachrichten (MM2) in besagtes Telekommunikationsnetz (TN) zum n-maligen Durchführen der besagten Verwaltungsoperation auf besagtem Netzwerkelement (NE1) oder zum Durchführen der besagten Verwaltungsoperation auf n Netzwerkelementen aus der besagten Vielzahl von Netzwerkelementen (NE1, NE2, NE3).

7. Die Netzvorrichtung (ATS) nach Anspruch 6, wobei die besagte, mindestens eine Kopfzeile entweder eine Transportebenenkopfzeile (Th1), oder eine Netzwerkebenenkopfzeile (Nh1), oder eine Datenlinkebenenkopfzeile (DLh1) oder eine Verwaltungsebenenkopfzeile (Mh1) ist.

8. Die Netzvorrichtung (ATS) nach Anspruch 6 oder 7, wobei besagtes Einspeisemodul (MMI) konfiguriert ist für das Einspeisen mindestens einer weiteren Kopfzeile in besagte, n weiteren Verwaltungsnachrichten (MM2).

9. Die Netzvorrichtung (ATS) nach Anspruch 8, wobei die besagte, mindestens eine weitere Kopfzeile entweder eine Transportebenenkopfzeile (Th2), oder eine Netzwerkebenenkopfzeile (Nh2), oder eine Datenlinkebenenkopfzeile (DLh2) oder eine Verwaltungsebenenkopfzeile (Mh2) ist.

10. Die Netzvorrichtung (ATS) nach einem jeglichen der Ansprüche 6 bis 9, weiterhin umfassend:
d) ein Einhol- und Vergleichsmodul (RC) für:
- das Einholen eines Ergebnisses des Durchführens der besagten Verwaltungsoperation von dem besagten Netzwerkelement (NE1);
- das Vergleichen des besagten, von besagtem Netzwerkelement (NE1) eingeholten Ergebnisses mit einem erwarteten Ergebnis; und
e) einen Umplaner (TR), um gemäß den Ergebnissen besagten Vergleichens zu entscheiden, ob besagtes Filter- und Repliziermodul (F&R) und besagtes Einspeisemodul (MMI) zu aktivieren sind.

11. Ein Telekommunikationsnetz (TN), eine Vielzahl von Netzwerkelementen (NE1, NE2, NE3) und eine Netzvorrichtung (ATS) nach einem jeglichen der Ansprüche 6 bis 10 umfassend.

12. Computerprogramm zum Unterstützen des Testens einer Vielzahl von Netzwerkelementen (NE1, NE2, NE3) eines Telekommunikationsnetzes (TN), wenn besagtes Programm auf einer Netzvorrichtung (ATS) besagten Telekommunikationsnetzes (TN) ausgeführt wird, wobei besagtes Computerprogramm umfasst:
a) ein erstes Computerprogrammmittel (MMD) für das Feststellen einer Verwaltungsnachricht (MM1), die von einem Netzwerkverwaltungsserver (NMS) an ein Netzwerkelement (NE1) aus besagter Vielzahl von Netzwerkelementen (NE1, NE2, NE3) übermittelt wird, wobei besagte Verwaltungsnachricht (MM1) mindestens eine Kopfzeile und ein Nutzdatum (P) umfasst, welches Information bezüglich einer Verwaltungsoperation umfasst, die auf besagtem Netzwerkelement (NE1) auszuführen ist, um dieses zu testen;
b) zweite Computerprogrammmittel (F&R) für:
- das Filtern der besagten, festgestellten Verwaltungsnachricht (MM1) zum Isolieren besagten Nutzdatums (P) durch das Auslesen der besagten, mindestens einen Kopfzeile aus der besagten, festgestellten Verwaltungsnachricht (MM1); und
- das Replizieren des besagten Nutzdatums (P) zum Erhalt von n Kopien des besagten Nutzdatums (P), wobei n gleich einer Anzahl von Malen ist, die besagte Verwaltungsoperation auf dem besagten Netzwerkelement (NE1) auszuführen ist, oder wobei n gleich einer Anzahl von Netzwerkelementen aus der besagten Vielzahl von Netzwerkelementen (NE1, NE2, NE3) ist, auf welche besagte Verwaltungsoperation anzuwenden ist; und
c) dritte Computerprogrammmittel (MMI) für:
- das Einkapseln der besagten n Kopien des besagten Nutzdatums (P) in n weitere Verwaltungsnachrichten (MM2); und
- das Einspeisen der besagten, n weiteren Verwaltungsnachrichten (MM2) in besagtes Telekommunikationsnetz (TN) zum n-maligen Durchführen der besagten Verwaltungsoperation auf besagtem Netzwerkelement (NE1) oder zum Durchführen der besagten Verwaltungsoperation auf n Netzwerkelementen aus der besagten Vielzahl von Netzwerkelementen (NE1, NE2, NE3).

13. Computerlesbares Medium, auf dem ein Computerprogramm gespeichert ist, wobei besagtes Computerprogramm Anspruch 12 entspricht.

## Revendications

1. Procédé pour supporter le test d'une pluralité d'éléments de réseau (NE1, NE2, NE3) d'un réseau de télécommunication (TN), ledit procédé comprenant les étapes suivantes :
a) détecter un message de gestion (MM1) transmis d'un serveur de gestion de réseau (NMS) à un élément de réseau (NE1) de ladite pluralité d'éléments de réseau (NE1, NE2, NE3), ledit message de gestion (MM1) comprenant au moins un en-tête et une charge utile (P) comprenant des informations relatives à une opération de gestion devant être effectuée sur ledit élément de réseau (NE1) pour le tester ;
b) filtrer ledit message de gestion détecté (MM1) pour isoler ladite charge utile (P), en supprimant dudit message de gestion détecté (MM1) ledit au moins un en-tête ;
c) répliquer ladite charge utile (P) pour obtenir n copies de ladite charge utile (P), n étant égal à un nombre de fois que ladite opération de gestion doit être effectuée sur ledit élément de réseau (NE1) ou n étant égal à un nombre d'éléments de réseau de ladite pluralité d'éléments de réseau (NE1, NE2, NE3) sur lesquels ladite opération de gestion doit être effectuée ;
d) encapsuler lesdites n copies de ladite charge utile (P) dans n autres messages de gestion (MM2) ; et
e) injecter lesdits n autres messages de gestion (MM2) dans ledit réseau de télécommunication (TN) pour effectuer ladite opération de gestion n fois sur ledit élément de réseau (NE1) ou pour effectuer ladite opération de gestion sur n éléments de réseau de ladite pluralité d'éléments de réseau (NE1, NE2, NE3).

2. Procédé selon la revendication 1, dans lequel ledit au moins un en-tête est l'un d'un en-tête de couche transport (Th1), d'un en-tête de couche réseau (Nh1), d'un en-tête de couche liaison de données (DLh1) et d'un en-tête de gestion (Mh1).

3. Procédé selon l'une quelconque des revendications précédentes, dans lequel ladite étape d) comprend l'insertion dans lesdits n autres messages de gestion (MM2) d'au moins un autre en-tête.

4. Procédé selon la revendication 3, dans lequel ledit au moins un autre en-tête est l'un d'un en-tête de couche transport (Th2), d'un en-tête de couche réseau (Nh2), d'un en-tête de couche liaison de données (DLh2) et d'un en-tête de gestion (Mh2).

5. Procédé selon l'une quelconque des revendications précédentes, comprenant en outre les étapes suivantes :
f) collecter à partir dudit élément de réseau (NE1) un résultat de l'exécution de ladite opération de gestion ;
g) comparer ledit résultat collecté à partir dudit élément de réseau (NE1) avec un résultat attendu ; et
h) décider si répéter les étapes c), d) et e) en fonction des résultats de ladite comparaison.

6. Appareil de réseau (ATS) pour supporter le test d'une pluralité d'éléments de réseau (NE1, NE2, NE3) d'un réseau de télécommunication (TN), ledit appareil de réseau (ATS) comprenant :
a) un module de détection (MDD) pour détecter un message de gestion (MM1) transmis d'un serveur de gestion de réseau (NMS) à un élément de réseau (NE1) de ladite pluralité d'éléments de réseau (NE1, NE2, NE3), ledit message de gestion (MM1) comprenant au moins un en-tête et une charge utile (P) comprenant des informations relatives à une opération de gestion devant être effectuée sur ledit élément de réseau (NE1) pour le tester ;
b) un module de filtrage et de réplication (F&R) pour :
- filtrer ledit message de gestion détecté (MM1) pour isoler ladite charge utile (P) en supprimant dudit message de gestion détecté (MM1) ledit au moins un en-tête ; et
- répliquer ladite charge utile (P) pour obtenir n copies de ladite charge utile (P), n étant égal à un nombre de fois que ladite opération de gestion doit être effectuée sur ledit élément de réseau (NE1) ou n étant égal à un nombre d'éléments de réseau de ladite pluralité d'éléments de réseau (NE1, NE2, NE3) sur lesquels ladite opération de gestion doit être effectuée ; et
c) un module d'injection (MMI) pour :
- encapsuler lesdites n copies de ladite charge utile (P) dans n autres messages de gestion (MM2) ; et
- injecter lesdits n autres messages de gestion (MM2) dans ledit réseau de télécommunication (TN) pour effectuer ladite opération de gestion n fois sur ledit élément de réseau (NE1) ou pour effectuer ladite opération de gestion sur n éléments de réseau de ladite pluralité d'éléments de réseau (NE1, NE2, NE3).

7. Appareil de réseau (ATS) selon la revendication 6, dans lequel ledit au moins un en-tête est l'un d'un en-tête de couche transport (Th1), d'un en-tête de couche réseau (Nh1), d'un en-tête de couche liaison de données (DLh1) et d'un en-tête de gestion (Mh1).

8. Appareil de réseau (ATS) selon la revendication 6 ou 7, dans lequel ledit module d'injection (MMI) est configuré pour insérer dans lesdits n autres message de gestion (MM2) au moins un autre en-tête.

9. Appareil de réseau (ATS) selon la revendication 8, dans lequel ledit au moins un autre en-tête est l'un d'un en-tête de couche transport (Th2), d'un en-tête de couche réseau (Nh2), d'un en-tête de couche liaison de données (DLh2) et d'un en-tête de gestion (Mh2).

10. Appareil de réseau (ATS) selon l'une quelconque des revendications 6 à 9, comprenant en outre :
d) un module de collecte et de comparaison (RC) pour :
- collecter à partir dudit élément de réseau (NE1) un résultat de l'exécution de ladite opération de gestion ; et
- comparer ledit résultat collecté à partir dudit élément de réseau (NE1) avec un résultat attendu ; et
e) un réordonnanceur (TR) pour décider si activer ledit module de filtrage et de réplication (F&R) et ledit module d'injection (MMI) en fonction des résultats de ladite comparaison.

11. Réseau de télécommunication (TN) comprenant une pluralité d'éléments de réseau (NE1, NE2, NE3) et un appareil de réseau (ATS) selon l'une quelconque des revendications 6 à 10.

12. Programme informatique pour supporter le test d'une pluralité d'éléments de réseau (NE1, NE2, NE3) d'un réseau de télécommunication (TN) lorsque ledit programme est exécuté sur un appareil de réseau (ATS) dudit réseau de télécommunication (TN), ledit programme informatique comprenant :
a) des premiers moyens de code de programme informatique (MMD) pour détecter un message de gestion (MM1) transmis d'un serveur de gestion de réseau (NMS) à un élément de réseau (NE1) de ladite pluralité d'éléments de réseau (NE1, NE2, NE3), ledit message de gestion (MM1) comprenant au moins un en-tête et une charge utile (P) comprenant des informations relatives à une opération de gestion devant être effectuée sur ledit élément de réseau (NE1) pour le tester ;
b) des deuxièmes moyens de code de programme informatique (F&R) pour :
- filtrer ledit message de gestion détecté (MM1) pour isoler ladite charge utile (P) en supprimant dudit message de gestion détecté (MM1) ledit au moins un en-tête ; et
- répliquer ladite charge utile (P) pour obtenir n copies de ladite charge utile (P), n étant égal à un nombre de fois que ladite opération de gestion doit être effectuée sur ledit élément de réseau (NE1) ou n étant égal à un nombre d'éléments de réseau de ladite pluralité d'éléments de réseau (NE1, NE2, NE3) sur lesquels ladite opération de gestion doit être effectuée ; et
c) des troisièmes moyens de code de programme informatique (MMI) pour :
- encapsuler lesdites n copies de ladite charge utile (P) dans n autres messages de gestion (MM2) ; et
- injecter lesdits n autres messages de gestion (MM2) dans ledit réseau de télécommunication (TN) pour effectuer ladite opération de gestion n fois sur ledit élément de réseau (NE1) ou pour effectuer ladite opération de gestion sur n éléments de réseau de ladite pluralité d'éléments de réseau (NE1, NE2, NE3).

13. Support lisible par ordinateur sur lequel est enregistré un programme informatique, ledit programme informatique étant selon la revendication 12.
